# EUROPEAN PATENT SPECIFICATION

(11) **EP 1 089 180 B1**
(45) Date of publication and mention of the grant of the patent: **21.04.2004**
(21) Application number: 00120098.9
(22) Date of filing: 15.09.2000
(51) Int. Cl.: G06F 11/273, G06F 11/22

(54) **Distributed remote management method for computer equipment**
Verteiltes Fernverwaltungsverfahren für eine Rechnervorrichtung
Procédé de gestion distribué à distance pour un système d'ordinateur

(30) Priority: 16.09.1999 JP 26257399
(43) Date of publication of application: 04.04.2001
(73) Proprietor: NEC CORPORATION, Tokyo (JP)
(72) Inventor: Hayashi, Yasuhiro, Minato-ku, Tokyo (JP); Kido, Masahiro, Minato-ku, Tokyo (JP)
(74) Representative: Betten & Resch

(56) References cited:
- US-A- 5 155 847
- US-A- 5 287 505

## Description

### BACKGROUND OF THE INVENTION

### Field of the Invention

The present invention relates to a distributed remote management method for computer equipment for managing and maintaining the setting information of computer equipment based on a previously defined policy.

This application is based on Japanese Patent Application No. Hei 11-262573 (Unpublished).

### Description of the Related Art

Recently, the importance of computer networks in industries is increasing, and the number of computers connected to networks is also increasing. In such intra-organization computer networks, there are data showing that management expenses are overwhelmingly larger than the cost of computer equipment itself. Accordingly, there is a demand for a technique which can efficiently manage a plurality of computers connected to a network at a low cost. Moreover, in view of controlling security, it is important to maintain the consistency of settings of various equipment connected to the network, by means of a centralized control.

In such a situation, unified management of various setting information of respective computer equipment through the medium of the network, provides a large advantage in cost. As a result, tools for performing unified management have already been put to practical use and utilized. Moreover, as for the security aspect, an apparatus has been invented which manages and maintains network security by preparing a security policy in an open distributed environment, as disclosed for example, in Japanese Unexamined Patent Application, First Publication No. Hei. 7-141296.

As described above, techniques which can perform unified management of setting information of computer equipment over a whole network have been provided, and an overall administrator who generalize the whole network receive a benefit from these techniques. On the other hand, since it is also possible to set respective computer equipment individually, there may be a case where individual administrators of the computer equipment make an inappropriate setting due to carelessness, or a case where an attacker being a third party changes the setting maliciously.

That is to say, it is important that the setting information by means of unified management always coincides with the information set in the actual computer equipment. Nevertheless, with the related art, it is not possible to appropriately cope with disagreement which may arise in the above described situation.

### SUMMARY OF THE INVENTION

In view of the above situation, it is an object of the present invention to provide a distributed remote management method for computer equipment in which not only setting of the computer equipment to be managed is performed, but also the above described disagreement is detected by a function provided in the computer equipment to be managed itself, to thereby automatically perform appropriate countermeasure, so that as a result, the setting information is maintained in an appropriate condition.

To solve the above problem, with the present invention, a policy management operation section or the like in a management server connected to the network, collectively holds and manages specified values (setting data) related to the setting information and the countermeasures (policy data). That is, since these specified values and countermeasures are uniformly managed on the management server side, it becomes possible for an administrator to input and edit these on an operation terminal operated by the administrator. As a result, the computer equipment to be managed connected to the network can be efficiently controlled collectively, enabling a decrease in management expenses.

Moreover, the above described specified values are held in the computer equipment to be managed, and compared with set values actually set as the setting information of the computer equipment to be managed. Then, detection of disagreement between the specified value and the set value is made. Moreover, if there is disagreement between these, a policy in the countermeasure specified in advance and held on the computer equipment to be managed is referred to, and a corresponding corrective action is automatically executed for each item in which disagreement is detected.

Accordingly, it is possible to detect a situation where the setting information on the computer equipment to be managed is altered and disagrees with the specified value, due to carelessness of an administrator of individual computer equipment to be managed, or malicious intention of an attacker being a third party. Hence, suitable action can be taken, such as automatic restoration of the setting information, notification to the administrator by means of automatic mail transmission or the like, depending on the corrective action specified in the countermeasures. As a result, it becomes possible to maintain the setting information of the whole system as per the intention of the administrator, thereby enabling protection against attacks from an attacker or the like.

In addition, the specified values, the countermeasures, and the setting information are all held in the computer equipment to be managed, and processing for applying the policy is executed on the computer equipment to be managed. Therefore in the course of this processing, the imposition of a burden on the network resources due to the flow of the data of the specified values, the countermeasures, and the setting information, can be avoided.

These objects are solved in advantageous manner basically by applying the features laid down in the independent claims. Further enhancements are provided by the subclaims.

### BRIEF DESCRIPTION OF THE DRAWINGS

FIG. 1 is a block diagram showing a construction for realizing a structure for setting information management according to one embodiment of the present invention.
FIG. 2 is a flow chart showing a processing of a policy management operation section according to the embodiment.
FIG. 3 is a flow chart showing a processing of a policy application operation section according to the embodiment.
FIG. 4 is a diagram showing an example of a data structure for setting data according to the embodiment.
FIG. 5 is a diagram showing an example of a data structure for policy data according to the embodiment.

### DESCRIPTION OF THE PREFERRED EMBODIMENT

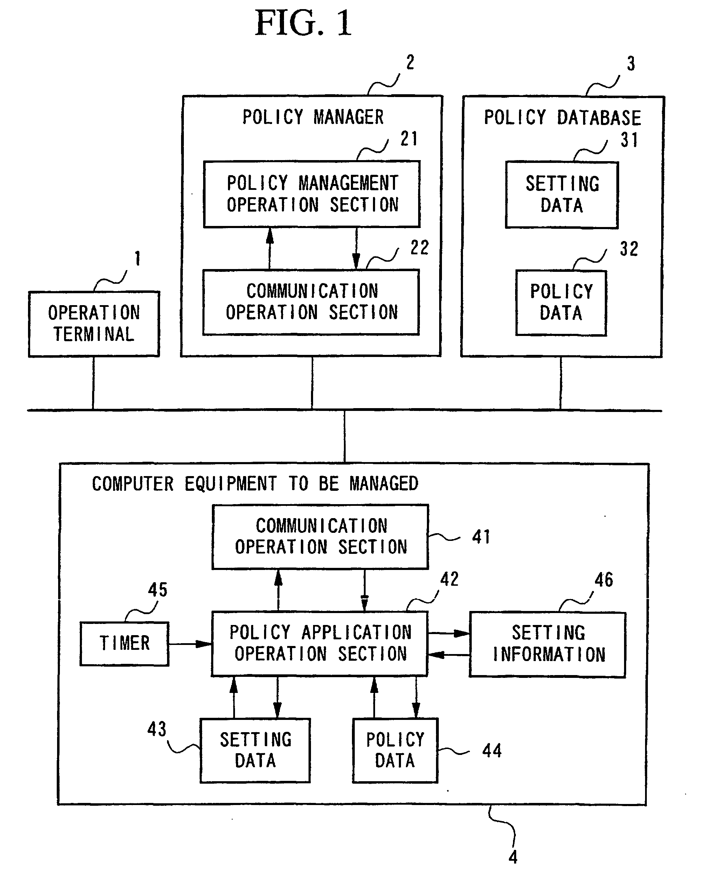

One embodiment of the present invention will now be described with reference to the drawings. FIG. 1 is a block diagram showing a construction of a policy manager (management server) and computer equipment to be managed according to the embodiment of the present invention. In this figure, reference symbol 1 denotes an operation terminal for performing input and editing of setting information, 2 denotes a policy manager, 3 denotes a policy database managed by the policy manager 2, and 4 denotes computer equipment to be managed.

The policy manager 2 is provided with a policy management operation section 21 and a communication operation section 22. Setting data 31 (specified values) of the computer equipment to be managed 4 and policy data 32 (countermeasures) input from the operation terminal 1 by an administrator, are notified from the policy management operation section 21 to the policy database 3. The policy database 3 holds these setting data 31 and policy data 32.

In the computer equipment to be managed 4, reference symbol 41 denotes a communication operation section, 42 denotes a policy application operation section (management unit), and 45 denotes a timer. Moreover, 43 denotes setting data (specified values), and 44 denotes policy data (countermeasures), and these setting data 43 and policy data 44 are transferred from the policy management operation section 21 via the communication operation section 22 and the communication operation section 41 to the policy application operation section 42, and written in a memory (not shown). Contents of the setting data 43 and the policy data 44 will be described later.

Moreover, 46 denotes setting information. The setting information is set by the policy application operation section 42 based on the setting data 43, and when the computer equipment to be managed 4 actually operates, the set values written in the setting information 46 are referred to.

In FIG. 1, only one computer equipment to be managed 4 is shown, but there may be any number of computer equipment to be managed 4.

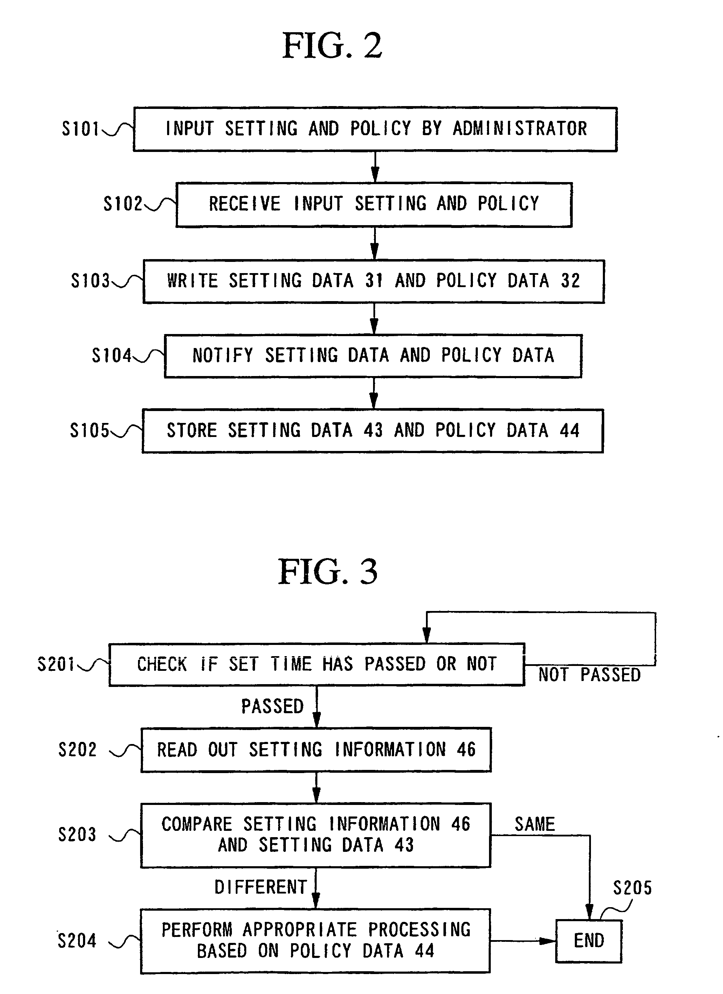

Next, the operating procedure in this embodiment will be described. FIG. 2 is a flow chart showing a procedure for setting the setting data 43 and the policy data 44.

At first, in step S101 in FIG. 2, an administrator inputs the setting data (that is, values to be set) and the policy data (that is, countermeasures when incorrect data is detected in each item), for each computer equipment to be managed and each item of setting information, through the operation terminal 1.

Next, in step S 102, the policy management operation section 21 in the policy manager 2 receives the input setting data and policy data, and in step S 103, records these data on the policy database 3 as the setting data 31 and the policy data 32.

Then, in step S104, the policy management operation section 21 notifies the above described setting data and policy data via the communication operation section 22 and the communication operation section 41 to the policy application operation section 42 in the computer equipment to be managed 4 to which the setting data and policy data are applied.

In step S105, the policy application operation section 42, which has received these data, writes these data to a memory provided in the computer equipment to be managed 4 itself, and holds these data in the memory as the setting data 43 and policy data 44.

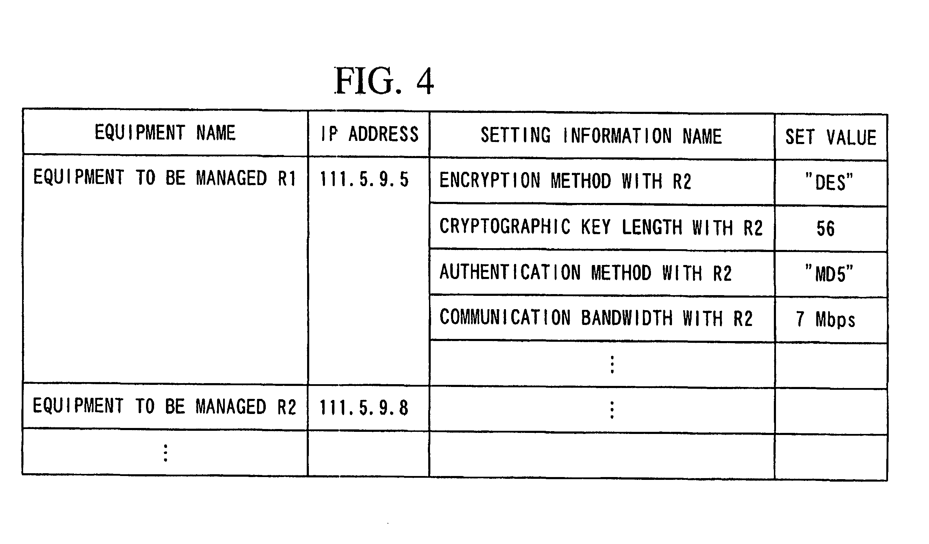

FIG. 4 shows an example of information contents held as the setting data 31 and the setting data 43. As shown in FIG. 4, in this example, the encryption method when the computer equipment to be managed 4 (equipment to be managed R1) communicates with other computer equipment to be managed (equipment to be managed R2) is "DES" (Data Encryption Standard), the cryptographic key length is "56", the authentication method is "MD5", and the communication bandwidth is "7 Mbps" (7 megabits per second). Other than these setting information, specified values of the setting information that are required by the OS (Operating System) mounted on the computer equipment to be managed 4, or the network function are included in the setting data.

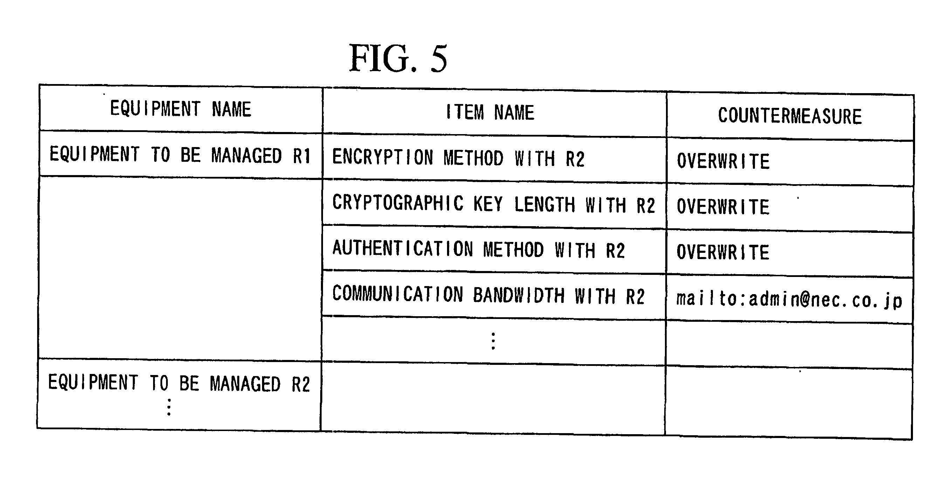

Moreover, FIG. 5 shows an example of the information contents held as the policy data 32 and the policy data 44. As shown in FIG. 5, each item name of the policy data corresponds to each setting information name of the setting data shown in FIG. 4. The countermeasure (corrective action) to be taken when incorrect setting is detected by means of a check described later, is held for each setting information name.

In this example, corrective action is decided such that when disagreement is found between the specified value to be set and an actually set value, the specified value is set by means of overwrite, respectively, with regard to the encryption method used between equipment to be managed R1 and the equipment to be managed R2, the cryptographic key length used between equipment to be managed R1 and the equipment to be managed R2, and the authentication method used between equipment to be managed R1 and the equipment to be managed R2. Furthermore, corrective action is decided for the communication bandwidth such that when disagreement is found in the communication bandwidth used between equipment to be managed R1 and the equipment to be managed R2, this is notified by e-mail to a mail address "admin@nec.co.jp".

Next, a description is given of a procedure for monitoring the setting of the computer equipment to be managed 4 and executing the processing based on the policy, using the setting data 43 and the policy data 44 whose contents are held as shown in the figure, in accordance with the above described method. FIG. 3 is a flow chart showing a procedure for the monitoring processing by the policy application operation section 42.

The policy application operation section 42 receives a notification from the timer 45 when a predetermined time has passed after completion of the former processing. Therefore, the policy application operation section 42 first checks whether the predetermined time has already passed or not, in step S201 in FIG. 3. If the predetermined time has not passed yet, the policy application operation section 42 repeats the processing of step S201, while on the other hand, if the predetermined time has already passed, the policy application operation section 42 shifts the processing to the next step S202.

After the above-described predetermined time has passed, the policy application operation section 42 reads out the setting information 46 in step S202. Then, the policy application operation section 42 reads out the setting data 43 in step S203, and compares the set value in the setting information 46 with the specified value in the setting data 43, with regard to respective setting items.

As a result of the comparison, if disagreement is not found between these, the processing proceeds to step S205 to complete the processing. On the other hand, if any disagreement is found between these, the processing proceeds to step S204 to read the policy data 44. Then, according to the countermeasure written in the policy data 44, the countermeasure is executed with respect to the information item where disagreement has been found.

For example, it is assumed that the "cryptographic key length with R2" defined in the setting information 46 is not "56" defined in the setting data 43 shown in FIG. 4, but is altered to "128" for some reason or other. In this case, the policy application operation section 42 reads out the information related to the "cryptographic key length with R2" defined in the policy data 44 shown in FIG. 5, and rewrites the "cryptographic key length with R2" set as the setting information 46 as "56", in accordance with "overwrite" being the predetermined countermeasure.

In this manner, if the corrective action is "overwrite", even if the setting information 46 has been altered due to carelessness or a malicious intention, the policy application operation section 42 resets it using the specified value. Hence the setting as per the intention of the administrator can be maintained.

For example, it is also assumed that the "communication bandwidth with R2" set in the setting information 46 is not "7 Mbps" defined in the setting data 43 shown in FIG. 4, but is altered to "5 Mbps" for some reason or other. In this case, the policy application operation section 42 reads out the information related to the "communication bandwidth with R2" defined in the policy data 44, and in accordance with "mailto:admin@ nec.co.jp" being the predetermined countermeasure, sends mail for reporting that disagreement has been detected, to this address.

In the example shown in FIG. 5, one corrective action is defined for one information item, but a plurality of corrective actions may be taken. For example, both of correction of the setting value by means of "overwrite" and mail transmission by means of "mailto: ...." may be executed.

Then, after the above described series of processing have been completed in step S205, regardless of whether disagreement is found or not in step S203, the policy application operation section 42 again waits for the notification of passing of the predetermined time from the timer 46. As a result, it becomes possible to monitor the monitor setting information, not only at a certain point of time but also continuously, to thereby obtain an effect of improvement in security or the like.

Here, the above described policy management operation section 21 and policy application operation section 42 can be realized as a function of the computer program. This computer program is recorded on a recording medium used by the computer system, and the computer reads out and executes this program, to thereby perform the processing by the above described respective operation sections.

That is to say, the computer program recorded on the recording medium is loaded on a main memory (not shown) on the computer equipment to be managed 4, and a central processing unit (not shown) on the computer equipment to be managed 4 executes instructions described in the computer program one by one.

The process in which the computer reads out the computer program involves read out via the communication network. The recording medium used by the computer system is a floppy disk, a magneto-optical disk, a CD-ROM (Compact Disc Read Only Memory), a magnetic hard disk, a semiconductor memory or the like, but the recording medium is not limited thereto.

As described above, according to this embodiment, specified values related to the setting information are held in the setting data 43 of the computer equipment to be managed 4, and these specified values are regularly compared with set values actually set in the setting information 46 of the computer equipment to be managed 4. Hence, even if the setting information on the computer equipment to be managed side has been altered due to carelessness of an administrator of the individual computer equipment to be managed, or a malicious intention of an attacker being a third party, to cause disagreement between the above described specified value and the set value, such an alteration of the setting information can be detected.

Moreover, when disagreement is detected, the policy in the countermeasure specified in advance and held in the computer equipment to be managed 4 as the policy data 44 is referred to, and the corresponding corrective action is automatically taken. Hence, it becomes possible to take appropriate action according to the specified corrective action, such as automatic restoration of the setting information, notification by means of automatic mail transmission to an administrator or the like. As a result, the setting information of the whole system can be maintained as per the intention of the administrator, thereby enabling prevention against an attack from an attacker.

Furthermore, the above described setting data 43, policy data 44 and setting information 46 are all held in the computer equipment to be managed 4, and processing performed by the policy application operation section 42 is also executed on the computer equipment to be managed 4. Hence the flow of these data on the network due to this processing, and the resultant imposition of a burden on the network resources can be avoided.

The setting data 31, 43 and the policy data 32, 44 are also uniformly managed by the policy management operation section 21, enabling input and editing on the operation terminal 1. Hence, it becomes possible to collectively manage the computer equipment connected to the network efficiently, enabling a decrease in management expenses.

In addition, the computer equipment to be managed 4 comprises the timer 45 for performing a timing function. For example, this timing function is associated with the timer program in the above described computer program, thereby enabling repetition of processing of the above described comparison check at regular intervals. As a result, alteration of the setting information can be monitored continuously.

This invention may be embodied in other forms or carried out in other ways without departing from the scope of the invention as defined by the appended claims. The present embodiments are therefore to be considered in all respects illustrative and not limiting and all modifications falling within the meaning and range of equivalency are intended to be embraced therein.

## Claims

1. A distributed remote management method for computer equipment for maintaining in appropriate condition setting information of computer equipment based on a previously defined policy, said computer equipment to be managed (4) connected to a network, comprising the steps of:
a first step for writing in advance specified values (43) of said setting information and countermeasures (44) denoting policy data when disagreement is found between a set value of said setting information and said specified value, in a memory provided in said computer equipment to be managed, based on the information managed by a management server (2) connected to said network;
a second step in which a management unit provided in said computer equipment to be managed reads out said specified value from said memory;
a third step in which said management unit reads out a set value (46) actually set as said setting information;
a fourth step in which said management unit determines whether said specified value agrees with said set value or not;
a fifth step in which said management unit reads out said countermeasure from said memory, when disagreement is found in said fourth step; and
a sixth step for executing said countermeasure obtained in said fifth step.

2. A distributed remote management method for computer equipment according to claim 1, wherein a trigger is applied to said management unit by a timer (45) at regular intervals, and said management unit repeatedly executes said second to sixth steps based on this trigger.

3. A distributed remote management method for computer equipment according to claim 1 or 2, wherein
in said first step, a plurality of said countermeasures are written for each information item of said setting information;
in said fifth step, said plurality of countermeasures are read out from said memory; and
in said sixth step, said plurality of countermeasures are executed.

4. A distributed remote management method for computer equipment according to claim 1, 2 or 3, wherein in said sixth step, as said countermeasure, the set value of said setting information is overwritten with said specified value.

5. A distributed remote management method for computer equipment according to claim 1, wherein in said sixth step, as said countermeasure it is reported to a predetermined address to be notified that disagreement has been found.

6. A computer program product including a computer-readable control program recorded on a computer-usable medium, wherein
said control program operates on computer equipment to be managed (4), for maintaining in an appropriate condition setting information of said computer equipment based an a previously defined policy, said computer equipment to be managed connected to a network, and executes:
first processing for receiving and writing in advance to memory from a management server (2) connected to said network, specified values (43) of said setting information, and countermeasures (44) denoting policy data when disagreement is found between a set value of said setting information and said specified value, for carrying out against said disagreement;
second processing for reading out said specified value from said memory;
third processing for reading out a set value (46) actually set as said setting information;
fourth processing for determining whether said specified value agrees with said set value or not;
fifth processing for reading out said countermeasure from said memory, when disagreement is found in said fourth processing; and
sixth processing for executing said countermeasure obtained in said fifth processing.

7. A computer program comprising program code for carrying out the method steps of any one of claims 1 to 5.

## Patentansprüche

1. Verteiltes Femmanagementverfahren für eine Computereinrichtung zum Beibehalten von Einstellinformation der Computereinrichtung in einem geeigneten Zustand basierend auf einer zuvor definierten Verfahrensweise, wobei die zu managende Computereinrichtung (4) an ein Netzwerk angeschlossen ist, welches Verfahren die folgenden Schritte aufweist:
einen ersten Schritt zum Schreiben im Voraus von spezifizierten Werten (43) der Einstellinformation und von Gegenmaßnahmen (44), die Verfahrensweisensdaten bezeichnen, wenn ein Unterschied zwischen einem eingestellten Wert der Einstellinformation und dem spezifizierten Wert gefunden wird, in einen Speicher, der in der zu managenden Computereinrichtung vorgesehen ist, basierend auf der durch einen an das Netzwerk angeschlossenen Managementserver (2) gemanagten Information;
einen zweiten Schritt, in welchem eine in der zu managenden Computereinrichtung vorgesehene Managementeinheit den spezifizierten Wert aus dem Speicher ausliest;
einen dritten Schritt, in welchem die Managementeinheit einen eingestellten Wert (46) ausliest, der aktuell als die Einstellinformation eingestellt ist;
einen vierten Schritt, in welchem die Managementeinheit bestimmt, ob der spezifizierte Wert mit dem eingestellten Wert übereinstimmt oder nicht;
einen fünften Schritt, in welchem die Managementeinheit die Gegenmaßnahme aus dem Speicher ausliest, wenn ein Unterschied im vierten Schritt gefunden wird; und
einen sechsten Schritt zum Ausführen der im fünften Schritt erhaltenen Gegenmaßnahme.

2. Verteiltes Fernmanagementverfahren für eine Computereinrichtung nach Anspruch 1, wobei ein Trigger auf die Managementeinheit durch einen Zeitgeber (45) in regelmäßigen Intervallen angewendet wird und die Managementeinheit die zweiten bis sechsten Schritte basierend auf diesem Trigger wiederholt ausführt.

3. Verteiltes Fernmanagementverfahren für eine Computereinrichtung nach Anspruch 1 oder 2, wobei
im ersten Schritt eine Vielzahl von Gegenmaßnahmen für ein jeweiliges Informationselement der Einstellinformation geschrieben wird;
im fünften Schritt die Vielzahl von Gegenmaßnahmen aus dem Speicher ausgelesen wird; und
im sechsten Schritt die Vielzahl von Gegenmaßnahmen ausgeführt wird.

4. Verteiltes Fernmanagementverfahren für eine Computereinrichtung nach Anspruch 1, 2 oder 3, wobei im sechsten Schritt als die Gegenmaßnahme der eingestellte Wert der Einstellinformation mit dem spezifizierten Wert überschrieben wird.

5. Verteiltes Femmanagementverfahren für eine Computereinrichtung nach Anspruch 1, wobei im sechsten Schritt als die Gegenmaßnahme zu einer vorbestimmten Adresse berichtet wird, damit sie darüber unterrichtet wird, dass ein Unterschied gefunden worden ist.

6. Computerprogrammprodukt mit einem auf einem Computer nutzbaren Medium aufgezeichneten computerlesbaren Steuerprogramm, wobei
das Steuerprogramm auf einer zu managenden Computereinrichtung (4) zum Beibehalten von Einstellinformation der Computereinrichtung in einem geeigneten Zustand basierend auf einer zuvor definierten Verfahrensweise arbeitet, wobei die zu managende Computereinrichtung an ein Netzwerk angeschlossen ist und folgendes ausführt:
eine erste Verarbeitung zum Empfangen und zum Schreiben im Voraus zu einem Speicher von einem an das Netzwerk angeschlossenen Managementserver (2) von spezifizierten Werten (43) der Einstellinformation und von Gegenmaßnahmen (44), die Verfahrensweisensdaten bezeichnen, wenn ein Unterschied zwischen einem eingestellten Wert der Einstellinformation und dem spezifizierten Wert gefunden wird, zur Ausführung gegen den Unterschied;
eine zweite Verarbeitung zum Auslesen des spezifizierten Werts aus dem Speicher;
eine dritte Verarbeitung zum Auslesen eines eingestellten Werts (46), der aktuell als die Einstellinformation eingestellt ist;
eine vierte Verarbeitung zum Bestimmen, ob der spezifizierte Wert mit dem eingestellten Wert übereinstimmt oder nicht;
eine fünfte Verarbeitung zum Auslesen der Gegenmaßnahme aus dem Speicher, wenn bei der vierten Verarbeitung ein Unterschied gefunden wird; und
eine sechste Verarbeitung zum Ausführen der bei der fünften Verarbeitung erhaltenen Gegenmaßnahme.

7. Computerprogramm mit einem Programmcode zum Ausführen der Verfahrensschritte nach einem der Ansprüche 1 bis 5.

## Revendications

1. Procédé de gestion distribuée à distance pour un système d'ordinateur, destiné à maintenir en condition appropriée des informations de réglage sur la base d'une stratégie préalablement définie, ledit système d'ordinateur, qui fait l'objet d'une gestion (4), étant connecté à un réseau, comprenant les étapes constituées :
d'une première étape consistant à écrire, à l'avance, des valeurs spécifiées (43) desdites informations de réglage et de contre-mesures (44) désignant des données de stratégie lorsqu'un désaccord est constaté entre une valeur fixée desdites informations de réglage et ladite valeur spécifiée, dans une mémoire prévue dans ledit système d'ordinateur faisant l'objet d'une gestion, sur la base des informations gérées par un serveur de gestion (2) connecté audit réseau ;
d'une seconde étape au cours de laquelle une unité de gestion prévue dans ledit système d'ordinateur faisant l'objet d'une gestion extrait ladite valeur spécifiée de ladite mémoire ;
d'une troisième étape au cours de laquelle ladite unité de gestion extrait une valeur fixée (46) fixée, en réalité, au titre desdites informations de réglage ;
d'une quatrième étape au cours de laquelle ladite unité de gestion détermine si ladite valeur spécifiée s'accorde ou non avec ladite valeur fixée ;
d'une cinquième étape au cours de laquelle ladite unité de gestion extrait ladite contre-mesure de ladite mémoire, lorsqu'un désaccord est constaté au cours de ladite quatrième étape ; et
d'une sixième étape consistant à exécuter ladite contre-mesure obtenue au cours de ladite cinquième étape.

2. Procédé de gestion distribuée à distance pour un système d'ordinateur selon la revendication 1, dans lequel un déclenchement est appliqué à ladite unité de gestion par une minuterie (45), à des intervalles réguliers, et ladite unité de gestion exécute, de façon répétée, lesdites seconde à sixième étapes, sur la base de ce déclenchement.

3. Procédé de gestion distribuée à distance pour un système d'ordinateur selon la revendication 1 ou 2, dans lequel
au cours de ladite première étape, une pluralité desdites contre-mesures sont écrites pour chaque élément d'information desdites informations de réglage ;
au cours de ladite cinquième étape, ladite pluralité de contre-mesures sont extraites de ladite mémoire ; et
au cours de ladite sixième étape, ladite pluralité de contre-mesures sont exécutées.

4. Procédé de gestion distribuée à distance pour un système d'ordinateur selon la revendication 1, 2 ou 3, dans lequel, au cours de ladite sixième étape, au titre de ladite contre-mesure, la valeur fixée desdites informations de réglage est écrite en remplacement de ladite valeur spécifiée.

5. Procédé de gestion distribuée à distance pour un système d'ordinateur selon la revendication 1, dans lequel, au cours de ladite sixième étape, au titre de ladite contre-mesure, il est rapporté, à une adresse prédéterminée faisant l'objet d'une notification, qu'un désaccord a été constaté.

6. Produit de programme d'ordinateur incluant un programme de commande pouvant être lu par un ordinateur et enregistré sur un support pouvant être utilisé sur un ordinateur, dans lequel
ledit programme de commande s'exécute sur un système d'ordinateur faisant l'objet d'une gestion (4), pour maintenir en condition appropriée des informations de réglage dudit système d'ordinateur sur la base d'une stratégie préalablement définie, - ledit système d'ordinateur, qui fait l'objet d'une gestion, étant connecté à un réseau, et exécute :
un premier traitement pour recevoir et écrire, à l'avance, dans une mémoire et à partir d'un serveur de gestion (2) connecté audit réseau , des valeurs spécifiées (43) desdites informations de réglage, et des contre-mesures (44) désignant des données de stratégie lorsqu'un désaccord est constaté entre une valeur fixée desdites informations de réglage et ladite valeur spécifiée, pour remédier audit désaccord ;
un second traitement pour extraire ladite valeur spécifiée de ladite mémoire ;
un troisième traitement pour extraire une valeur fixée (46) fixée, en réalité, au titre desdites informations de réglage ;
un quatrième traitement pour déterminer si ladite valeur spécifiée s'accorde ou non avec ladite valeur fixée ;
un cinquième traitement pour extraire ladite contre-mesure de ladite mémoire, lorsqu'un désaccord est constaté au cours dudit quatrième traitement ; et
un sixième traitement pour exécuter ladite contre-mesure obtenue au cours dudit cinquième traitement.

7. Programme d'ordinateur comprenant un code de programme pour mettre en oeuvre les étapes du procédé selon l'une quelconque des revendications 1 à 5.
